# EUROPÄISCHE PATENTANMELDUNG

(11) **EP 1 477 646 A2**
(43) Veröffentlichungstag der Anmeldung: **17.11.2004**
(21) Anmeldenummer: 04010739.3
(22) Anmeldetag: 06.05.2004
(51) Int. Cl.: F02B 27/02

(54) **Sauganlage für eine Brennkraftmaschine mit mindestens zwei Zylinderbankreihen**

(30) Priorität: 13.05.2003 DE 10321323
(71) Anmelder: Dr.Ing. h.c.F. Porsche Aktiengesellschaft, 70435 Stuttgart (DE)
(72) Erfinder: Rutschmann, Erwin, 75233 Tiefenbronn (DE)

(57) **Zusammenfassung**

Die Erfindung betrifft eine Sauganlage für eine Brennkraftmaschine mit mindestens zwei Zylinderbankreihen (4, 6), denen jeweils ein Resonanzbehälter (8, 10) mit zu den Zylindern führenden Einzelrohren (20 bis 22 bzw. 24 bis 26) zugeordnet ist, wobei die Resonanzbehälter (8, 10) über mit Schaltklappen (16, 18) versehene Querkanäle (12, 14) miteinander verbunden sind, sowie mit einer zu einem der Querkanäle führenden Luftzufuhrleitung (32), in der mindestens eine Drosselklappe (36) und ein Luftmassenmesser (38) angeordnet sind.

Es wird vorgeschlagen, dass die Luftzufuhrleitung (32, 34) zwei zu einem Querkanal (12) führende Einzelrohre (32a, 32b) aufweist, die stromaufwärts in einen gemeinsamen Einzelrohrabschnitt (34) übergehen, in dem die Drosselklappe (36) und der Luftmassenmesser (38) angeordnet sind.

## Beschreibung

Die Erfindung betrifft eine Sauganlage für eine Brennkraftmaschine mit mindestens zwei Zylinderbankreihen gemäß den Merkmalen des Oberbegriffs des Patentanspruchs 1.

Sauganlagen mit Resonanz - Aufladung zur optimalen Füllung der Zylinder bei unterschiedlichen Drehzahlen bzw. Lastbereichen sind aus dem Stand der Technik bekannt. So ist in der DE 198 14 970 A1 eine Sauganlage dargestellt und beschrieben, bei der mit Hilfe einer kontinuierlich verstellbaren Steuereinrichtung das Resonanzbehältervolumen stufenlos bzw. kontinuierlich dem Last- bzw. Drehzahlbereich angepasst werden kann. An den Resonanzbehälter ist ein zweiflutiges Ansaugrohr angeschlossen, das stromabwärts einer Drosselklappe zu einem gemeinsamen Rohrabschnitt zusammengeführt ist. Damit kann beim Öffnen und Schließen der den einzelnen Zylinderbänken zugeordneten Einlassventilen die Gassäule zwischen beiden Zylinderbänken entsprechend hin- und herschwingen und somit eine dynamische Aufladung der Brennkraftmaschine erreicht werden.

Aus der DE 198 42 724 A1 ist ebenfalls eine Sauganlage mit schaltbarem bzw. veränderbarem Resonanzvolumina bekannt. Dabei sind die den beiden Zylinderbankreihen zugeordneten Resonanzbehälter über zwei Querkanäle miteinander verbunden. In den beiden Querkanälen sind Schaltklappen angeordnet, durch die die Eigenfrequenz der Sauganlage im Sinne einer optimalen Füllung der Zylinder entsprechend verändert werden kann. An dem einen, beide Resonanzbehälter verbindenden Querkanal sind zwei Einzel - Ansaugrohre angeschlossen, in deren, dem Querkanal zugeordneten Enden jeweils eine Drosselklappe zur Steuerung der zugeführten Luftmenge vorgesehen ist.

Ausgehend von dem zuletzt genannten Stand der Technik ist es Aufgabe der Erfindung, unter Beibehaltung der Funktionalität die Sauganlage hinsichtlich Kostenaufwand und Package - Freiheitsgrad weiter zu verbessern.

Die Aufgabe wird durch die im Anspruch 1 angegebenen Merkmale gelöst.

Gegenüber der in der DE 198 42 724 A1 vorgesehenen doppelten Drosselklappenausführung ist nunmehr lediglich eine in einer gemeinsamen Vorsaugstrecke angeordnete Drosselklappe vorgesehen. Damit kann die Gesamtlänge der Ansaugleitung variabler gestaltet werden, da das den beiden Ansaug - Einzelrohren vorgeschaltete gemeinsame Ansaugrohr die Weglänge der zwischen beiden Resonanzbehältern hin und her schwingenden Gassäule nicht beeinflusst. Somit kann das der Drosselklappe vorgeschaltete Luftfiltergehäuse, den Bauraumverhältnissen besser angepasst, im Motorraum auf einfache Art und Weise platziert werden.

Durch die in den Unteransprüchen aufgeführten Maßnahmen sind weitere vorteilhafte Ausgestaltungen und Weiterbildungen der Sauganlage möglich.

Eine einfache und kostengünstige Möglichkeit der Anordnung der beiden in den Querkanälen vorgesehenen Schaltklappen ergibt sich, wenn diese -bezogen auf ihre Länge- im wesentlichen mittig in den Querkanälen angeordnet sind.

Als mögliche Alternative zu der im zweiten Querkanal vorgesehenen Schaltklappe kann diese auch durch zwei Einzelklappen ersetzt werden, die dann jeweils am Ende des Verbindungskanals angeordnet sind.

Zwei Ausführungsbeispiele der Erfindung sind in der nachfolgenden Beschreibung und Zeichnung näher erläutert.

Es zeigen:
- Fig. 1: eine schematisch dargestellte Sauganlage gemäß einer ersten Ausführungsform und
- Fig. 2: eine schematisch dargestellte Sauganlage gemäß einer zweiten Ausführungsform.

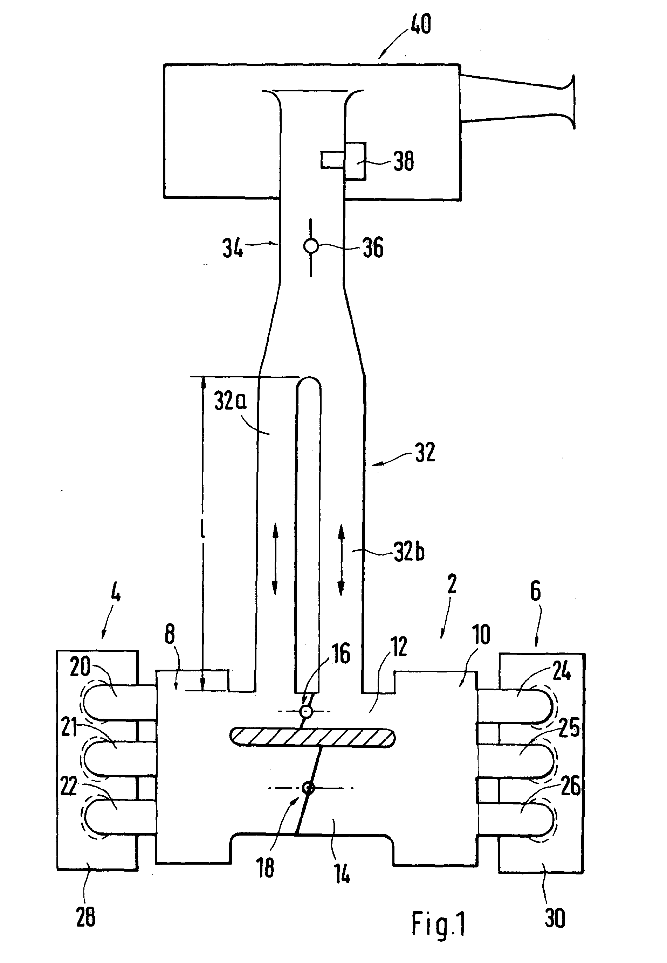

Die für einen 6 - Zylinder - Boxermotor ausgebildete Sauganlage 2 weist für jede Zylinderreihe 4 und 6 einen Resonanzbehälter 8 und 10 auf, die beide über zwei Querkanäle, die als Verbindungsrohre 12 und 14 ausgebildet sind, miteinander in Verbindung stehen. In beiden Verbindungsrohren 12 und 14 ist gemäß dem ersten Ausführungsbeispiel (siehe Fig. 1) jeweils eine Schaltklappe 16 und 18 vorgesehen, die - bezogen auf die Länge der beiden Verbindungsrohre 12, 14 - im wesentlichen mittig gelagert sind- und deren Funktionsweise später noch näher erläutert wird. Von den beiden Resonanzbehältern 8, 10 führen jeweils drei Einzelrohre 20 bis 22 bzw. 24 bis 26 zu jeweils einem nur schematisch dargestellten Zylinderkopf 28 und 30. An das erste Verbindungsrohr 12 ist eine Luftzufuhrleitung 32 angeschlossen, die über eine bestimmte Resonanzrohrlänge | aus zwei parallel zueinander verlaufenden Rohrabschnitten 32a und 32b besteht. Beide Rohrabschnitte 32a und 32b sind zu einem gemeinsamen Einzelrohrabschnitt 34 zusammengeführt, in dem eine Drosselklappe 36 zur Regelung der Luftmenge sowie ein Luftmassenmesser 38 angeordnet ist. Stromaufwärts von Drosselklappe 36 und Luftmassenmesser 38 ist das Luftfiltergehäuse 40 der Brennkraftmaschine angeordnet.

Die Resonanz - Sauganlage funktioniert dabei auf folgende Art und Weise. Gemäß Fig. 1 sind in einem unteren Drehzahlbereich, vorzugsweise zwischen 2000 und 3500 U/min beide in den Verbindungsrohren 12 und 14 angeordnete Schaltklappen 16 und 18 geschlossen. Damit wird die über die Luftzufuhrleitung 32 angesaugte Verbrennungsluft über die Rohrabschnitte 32a und 32b den beiden Resonanzbehältern 8 und 10 zugeführt. Durch das zeitlich versetzt erfolgende Öffnen und Schließen der Einlassventile auf den beiden Zylinderbankreihen 4 und 6 kann die Gassäule über die beiden Rohrabschnitte 32a und 32b zwischen den beiden Resonanzbehältern 8 und 10 hin und her schwingen. In einem mittleren Drehzahlbereich, beispielsweise zwischen 3500 und 5000 U/min wird die im Verbindungsrohr 12 angeordnete Schaltklappe 16 geöffnet, während die zweite, im Verbindungsrohr 14 angeordnete Schaltklappe 18 noch verschlossen bleibt. Durch das Öffnen der Schaltklappe 16 wird die Eigenfrequenz der Sauganlage so verändert, dass aufgrund von Resonanzschwingungen eine dynamische Aufladung und damit eine bessere Füllung der Zylinder mit Verbrennungsluft erreicht wird. In einem oberen Drehzahlbereich, z. B. zwischen 5000 und 7000 U/min wird auch die zweite Schaltklappe 18 geöffnet, so dass wiederum die Eigenfrequenz der Sauganlage für die optimale Füllung der Zylinder entsprechend angepasst ist.

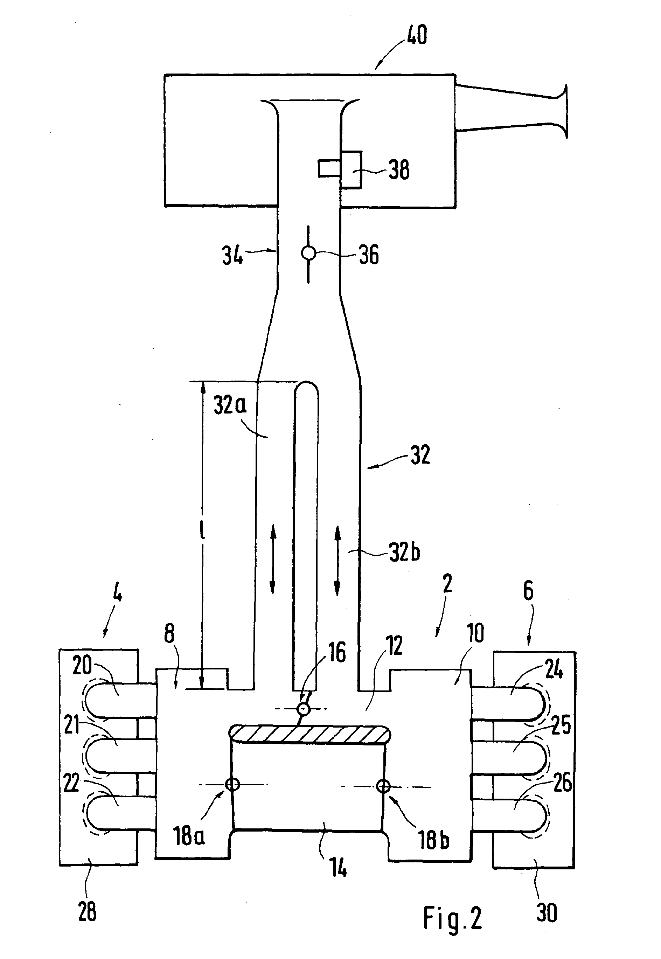

In einem zweiten Ausführungsbeispiel gemäß Fig. 2, bei dem gleiche Bauteile mit gleichen Bezugszeichen versehen sind, werden anstelle der im Verbindungsrohr 14 mittig gelagerten Schaltklappe 18 zwei am Anfang und Ende des Verbindungsrohres 14 angeordnete Schaltklappen 18a und 18b verwendet, die beide z.B. über einen gemeinsamen Stellmechanismus (nicht dargestellt) betätigbar sind. Die Funktionsweise ist dabei analog zu der im ersten Ausführungsbeispiel beschriebenen Sauganlage.

## Patentansprüche

1. Sauganlage für eine Brennkraftmaschine mit mindestens zwei Zylinderbankreihen (4, 6), denen jeweils ein Resonanzbehälter (8, 10) mit zu den Zylindern führenden Einzelrohren (20 bis 22 bzw. 24 bis 26) zugeordnet ist, wobei die Resonanzbehälter (8, 10) über mit Schaltklappen (16, 18) versehene Querkanäle (12, 14) miteinander verbunden sind, sowie mit einer zu einem der Querkanäle führenden Luftzufuhrleitung (32, 34), in der mindestens eine Drosselklappe (36) und ein Luftmassenmesser (38) angeordnet sind, **dadurch gekennzeichnet, dass** die Luftzufuhrleitung (32, 34) zwei zu einem Querkanal (12) führende Einzelrohre (32a, 32b) aufweist, die stromaufwärts in einen gemeinsamen Einzelrohrabschnitt (34) übergehen, in dem die Drosselklappe (36) und der Luftmassenmesser (38) angeordnet sind.

2. Sauganlage nach Anspruch 1, **dadurch gekennzeichnet, dass** die jeweils in einem Querkanal (12, 14) angeordnete Schaltklappe (16, 18) im wesentlichen mittig im Kanal angeordnet ist.

3. Sauganlage nach Anspruch 1, **dadurch gekennzeichnet, dass** im zweiten Querkanal (14) jeweils am Kanalanfang und Kanalende eine Schaltklappe (18a, 18b) angeordnet ist.
